# EUROPÄISCHE PATENTSCHRIFT

(11) **EP 1 280 852 B1**
(45) Veröffentlichungstag und Bekanntmachung des Hinweises auf die Patenterteilung: **06.07.2005**
(21) Anmeldenummer: 01919399.4
(22) Anmeldetag: 28.03.2001
(51) Int. Cl.: C08K 3/30, C08L 23/10, C08K 7/14

(54) **LANGFASERVERSTÄRKTE POLYOLEFIN-KUNSTSTOFF STRUKTUR UND DARAUS HERGESTELLTE FORMKÖRPER**
LONG FIBER REINFORCED POLYOLEFIN PLASTIC STRUCTURE AND SHAPED BODIES FORMED THEREFROM
STRUCTURE PLASTIQUE EN POLYOLEFINE, RENFORCEE PAR DES FIBRES LONGUES, ET CORPS MOULES OBTENUS A PARTIR DE CETTE STRUCTURE

(30) Priorität: 31.03.2000 DE 10015984
(43) Veröffentlichungstag der Anmeldung: 05.02.2003
(73) Patentinhaber: Ticona GmbH, 65451 Kelsterbach (DE)
(72) Erfinder: BORGNER, Thomas, 65747 Bischofsheim (DE); HEYDWEILLER, Joachim, 65428 Ruesselsheim (DE); BERND, Heinz, 64646 Heppenheim (DE); THOMAS, Gabriele, 64807 Dieburg (DE)
(86) Internationale Anmeldenummer: PCT/EP2001/003508
(87) Internationale Veröffentlichungsnummer: WO 2001/072883

(56) Entgegenhaltungen:
- EP-A- 0 315 451
- US-A- 5 079 281
- US-A- 5 883 186

## Beschreibung

Die vorliegende Erfindung betrifft eine langfaserverstärkte Polyolefin-Kunststoff Struktur und daraus hergestellte Formkörper mit sehr guter Schlagzähigkeit und hoher Wärmeformbeständigkeit (HDT) und deutlich verringerter Geruchsemission Die vorliegende Erfindung betrifft weiter die Verwendung der hergestellten Formkörper im Innenraum von Kraftfahrzeugen.

Polyolefin-Kunststoffe, insbesondere solche, die Polyethylen und Polypropylen umfassen, sind kostengünstige thermoplastische Kunststoffe mit einem leichten spezifischen Gewicht, guter Schmelzbarkeit sowie Widerstandsfähigkeit gegen chemische Einflüsse. Diese werden daher vielfach in Bereichen, wie allgemeine Haushaltsartikel, elektrischen und elektronischen Teilen verwendet. Polyolefin-Kunststoffe weisen jedoch gewöhnlich niedrige Wärmeformbeständigkeit (HDT) und niedrige mechanische Eigenschaften auf. Daher sind diese Kunststoffe für die Verwendung in Bereichen nicht geeignet, wo hohe Wärmeformbeständigkeit und hohe mechanische Festigkeit benötigt werden.

Es war bekannt, zur Verbesserung der Festigkeit eines Polyolefin-Kunststoffes, einer Verstärkungsfaser wie Glasfaser mit dem Polyolefin-Kunststoff zu mischen. Gewöhnlich wurde eine faserverstärkte Polyolefin-Kunststoffzusammensetzung erhalten, in dem ein Polyolefin-Kunststoff mit kurzen Verstärkungsfasern gemischt wurde und dann das Gemisch in einem Extruder extrudiert wurde. Dieses Verfahren weist jedoch den Nachteil auf, daß die Fasern beim Mahlen im Extruder brechen Es können mit diesem Verfahren keine Formkörper erhalten werden, die die gewünschte höhere mechanische Festigkeit aufweisen.

Es war auch bekannt ein Polyolefin-Kunststoff mit langen Fasern zu verstärken, wobei die Eigenschaft der Verstärkungsfaser auf das zu mischenden Polyolefin angewendet wird. Solch eine langfaserverstärkte Polyolefin Struktur kann zum Beispiel erhalten werden, in dem eine kontinuierlich abgewickelte Verstärkungsfaser in eine Emulsion oder eine Lösung eines Polyolefin-Kunststoffes oder in eine Polyolefin-Kunststoffschmelze getaucht wird. Der langfaserverstärkte Polyolefin-Kunststoff zeigt verglichen mit dem vorstehend beschriebenen kurzfaservestärkten Polyolefin-Kunststoff gute mechanische Eigenschaften.

Obwohl in der Automobilindustrie und ähnlichen Bereichen noch höhere Schlagzähigkeit gefordert wird, können übliche langfaserverstärkte Polyolefin-Kunststoffe dieses Erfordernis nicht erfüllen. Um die Stoßfestigkeit weiter zu verbessern, ist es möglich, einen anderen thermoplastische-Kunststoff mit sehr guter Stoßfestigkeit mit dem langfaserverstärkten Polyolefin-Kunststoff zu mischen Es können jedoch keine Produkte mit praktisch verwendbaren mechanischen Eigenschaften durch bloßes Mischen des Polyolefin-Kunststoffes mit einem anderen Kunststoff erhalten werden. Das ist anscheinend in der geringen Dispersibilität der Kunststoffe untereinander begründet.

Aus US-A 5,409,763 ist eine stabförmige langfaserverstärkte Polyolefin-Struktur mit einer Länge von mindestens 3 mm bekannt, welche hergestellt wird durch Mischen von 100 Gewichtsteilen einer Kunststoffkomponente umfassend 99 bis 50 Gewichtsteile eines Polyolefin-Kunststoffes und 1 bis 50 Gewichtsteile eines Polyamid-Kunststoffes mit 10 bis 200 Gewichtsteilen einer Verstärkungsfasers. Die Verstärkungsfaser hat die gleiche Länge wie die Struktur und ist im wesentlichen parallel zur Längsrichtung angeordnet. Weiter ist daraus ein Gegenstand bekannt, der aus einem solchen stabförmigen langfaserverstärkten Polyolefin-Kunststoff geformt ist. Die Verstärkungsfaser ist im Polyamid mit einer durchschnittlichen Faserlänge von mindestens 1 mm dispergiert, wobei sich der Polyolefin-Kunststoff sowie der Polyamid-Kunststoff durchdringen, um eine vernetzte Dispersion zu formen.

Es wird ein Polyamid als Kunststoff verwendet, das den Polyolefin-Kunststoff bezüglich Festigkeit überragt und bezüglich der Oberflächenspannung zwischen dem Polyolefin-Kunststoff und Verstärkungsfaser, wie Glasfaser, liegt. Es wird eine stabförmige Struktur durch Schmelzemischen des Polyolefin-Kunststoffes mit dem Polyamid-Kunststoff und Eintauchen der Verstärkungsfasers in die Schmelze und Formen der stabförmigen Struktur hergestellt. Daraus wird ein Formkörper mit einer extrem hohen Schlagzähigkeit erhalten. Darin bildet der Polyamid-Kunststoff mit der Verstärkungsfaser und formt gleichzeitig mit dem Polyolefin-Kunststoff eine Netzwerkstruktur aus. Diese Netzwerkstruktur wird weiter mit der Zunahme der Faserlänge verbessert.

Es ist bekannt, bevorzugt ein modifiziertes Polyolefin zu verwenden, da es funktionale Gruppen trägt, die eine hohe Affinität für den Polyamid-Kunststoff haben. Dadurch wird die Affinität zwischen dem Polyolefin-Kunststoff und dem Polyamid-Kunststoff erhöht und dadurch die Fähigkeit zur Ausbildung der Netzwerkstruktur verbessert. Wenn der Anteil an modifiziertem Polyolefin weniger als 1 Gew.-% beträgt, kann der Effekt nicht einsetzen. Wenn der Anteil 50 Gew -% ubersteigt, steigt die Viskosität der Zusammensetzung an, was zu Schwierigkeiten bei der Formgebung führen kann.

Der Polyolefin-Kunststoff kann durch Polymerisation einer α-Olefins Verbindung, wie Ethylen oder Propylen, mit einem geeigneten Katalysator hergestellt werden.

Als Polyamid-Kunststoff können verschiedene bekannte Polyamide verwendet werden. Wenn der Anteil an Polyamid-Kunststoff im Gemisch kleiner als 1 % ist, kann keine wirksame Verbesserung der Schlagzähigkeit erreicht werden. Wenn der Anteil 50 % übersteigt, entsteht das Problem, daß die räumliche Änderung des Formkorpers aufgrund der Wasserabsorption vergrößert wird.

Wenn der Anteil an Verstärkungsfaser weniger als 10 Gewichtsteile beträgt, wird nur ein gennger Verstärkungseffekt durch die Faser erreicht. Wenn der Anteil an Verstärkungsfaser 200 Gewichtsteile ubersteigt, wird die Herstellung der stabförmigen Struktur erschwert oder die Fähigkeit zur Verarbeitung zu einem Formkörper erheblich verschlechtert.

Es sind Zusammensetzungen aus Polyolefin-Kunststoff, Polyamid-Kunststoff, modifiziertes Polyolefin und Glasfaser aus dem Stand der Technik bekannt. Diese Zusammensetzungen werden unter anderem in JP-A 03126740, JP-A 03124748, GB-A 2225584, JP-A 02107664, JP-A 01087656, JP-A 01066268, JP-A 63305148, JP-B 06018929, JP-A 60104136, JP-B 61026939, JP-A 56030451, JP-A 6322266, JP-A 7053861, US-A-5883186, EP-A-351451, JP-A-6192448 und JP-A 6234896 beschrieben.

Für viele Anwendungen wird eine langfaserverstärkte Polyolefin-Kunststoff Struktur gefordert. Die langfaserverstärkte Polyolefin-Kunststoff Struktur wird zur Stabilisierung gegen Oxidation und UV-Bestrahlung sowie zur Einfärbung mit mindestens einem Additiv versetzt. Die Zugabe von mindestens einem Additiv, wie Farbstoff und/oder Pigment auch in kleinen Mengen hat auf die mechanische Eigenschaften des Polyolefin-Kunststoffes erhebliche Auswirkungen.

Bei einer kurzfaserverstärkten Polyolefin-Kunststoff Strukturen als Farbpigment TiO₂ eingesetzt werden TiO₂ ist als Farbpigment bei langfaserverstärkter Polyolefin-Kunststoff Struktur nicht geeignet, da die mechanische Eigenschaften durch den Zusatz von TiO₂ verschlechtert werden.

Es hat sich gezeigt, daß schwefelhaltige Additve bei langfaserverstärkter Polyolefin-Kunststoff Struktur besonders geeignet sind, da sie mechanische Eigenschaften nicht beeinflussen. Schwefelhaltige Additive haben jedoch den entscheidenden Nachteil einer üblen Geruchsemission. Die Geruchsemission macht die langfaserverstärkte Polyolefin-Kunststoff Struktur mit schwefelhaltigen Additiven zur Herstellung fur Teile im Innenbereich von Kraftfahrzeugen trotz sonst guter mechanischer Eigenschaften unbrauchbar.

Die Aufgabe der vorliegenden Erfindung besteht dann, eine langfaserverstärkte Polyolefin-Kunststoff Struktur mit sehr guten mechanischen Eigenschaften, guter Wärmebestandigkeit und geringer Wasserabsorbtion mit geringer Geruchsemission sowie ein umweltfreundliches und wirtschaftliches Verfahren zu deren Herstellung bereitzustellen.

Die Aufgabe der vorliegenden Erfindung wird gelöst durch eine langfaserverstärkte Polyolefin-Kunststoff Struktur mit einer Länge von ≥ 3 mm, die
a) 25 Gew.-% bis 58 Gew.-% mindestens eines Polyolefin-Kunststoffes,
b) 4 Gew -% bis 25 Gew.-% mindestens eines Polyamid-Kunststoffes,
c) 1,5 Gew.-% bis 10 Gew.-% mindestens eines modifizierten Polyolefin-Kunststoffes,
d) 19 Gew.-% bis 58 Gew.-% mindestens einer Verstärkungsfaser,
e) 0,2 Gew.-% bis 5,0 Gew.-% mindestens eines schwefelhaltigen Additivs und
f) gegebenenfalls weitere Additive,
wobei die Verstärkungsfaser die gleiche Länge hat wie die Polyolefin-Kunststoff Struktur.

Die vorliegende Erfindung ist gekennzeichnet durch die Verwendung mindestens eines schwefelhaltigen Additives, wie Farbstoff und/oder Pigment. Das so erhaltene gefärbte langfaserverstärkte Polymergemisch weist trotz Zugabe mindestens eines Farbstoffes und/oder Pigments unerwartet und überraschend sehr gute mechnische Eigenschaften, sehr gute Wärmeformbeständigkeit und geringe Wasserabsorbtion auf. Dieses Polymergemisch weist neben der guten mechanischen Eigenschaften eine überraschend niedrige Geruchsemission auf trotz Verwendung mindestens eines schwefelhaltigen Addives.

Als schwefelhaltiges Additiv wird bevorzugt bei gefärbten langfaserverstärkten Polyolefin-Strukturen ein schwefelhaltiges Farbmittel, bevorzugt ein schwefelhaltiges Pigment und besonders bevorzugt ein Sulfidhaltiges Pigment, wie Zinksulfid und Gemische davon verwendet. Gerade bei solchen schwefel- und/oder sulfidhaltigen Farbmitteln, insbesondere Pigmenten hat die erfindungsgemäße langfaserverstärkte Polyolefin-Kunststoff Struktur überraschend und unerwartet gezeigt, daß die Geruchsemission wesentlich geringer ist.

Die Zusammensetzung weist ganz hervorragende mechanische Eigenschaften, Wärmeformbeständigkeit und sehr geringe Wasserabsorption und eine außerordentlich niedrige Geruchsemission auf.

Erfindungsgemäß kann das Polyolefin-Kunststoff (a) erhalten werden durch Additionspolymerisation eines α-Olefins, wie Ethylen oder Propylen mit einem geeigneten Katalysator. Beispiele für das Polyolefin-Kunststoff (a) sind Homopolymere mit hoher, mittlerer und niedriger Dichte, wie Polyethylen, Polypropylen, Polymethylpenten und Copolymere dieser Polymere. Die Homopolymer und Copolymere können gradkettig und verzweigt vorliegen. Bei der Verzweigung gibt es keine Beschränkung so länge die Verformbarkeit gegeben ist. Ein Gemisch aus zwei und mehreren dieser Polymere können verwendet werden. Erfindungsgemäß wird bevorzugt Polypropylen als Polyolefin-Kunststoff verwendet. Der Polyolefin-Kunststoff kann außerdem in Mengen von 25 bis 30 Gew.-% in der erfindungsgemäßen langfaserverstärkten Polyolefin-Kunststoff Struktur enthalten sein.

Als der Polyamid-Kunststoff (b) könne erfindungsgemäß verschieden Polyamide verwendet werden. Beispiele sind Polyamide, die erhalten werden durch Polykondensation von Dicarbonsäuren, wie Oxalsäure, Adipinsäure, Suberinsäure, Sebacinsäure, Terephthalsäure, Isophthalsäure oder 1,4-Cyclohexyldicarbonsäure mit einem Diamin, wie Ethylendiamin, Pentamethylendiamin, hexamethylendiamin, Decamethylendiamin, 1,4-Cyclohexyldiamin oder m-Xyloldiamin, Polyamidverbindungen erhalten durch Polymerisation von cyclischem Lactam, wie Caprolactam oder Laurolactam und Polyamide erhalten durch Copolymerisation von cyclischem Lactam und einem Dicarbonsäuresalz mit einem Diamin. Erfindungsgemäß sind Nylon 6 (Polyamid 6), Nylon 66 (Polyamid 66) und Copolymere davon bevorzugt. Erfindungsgemäß ist der Polyamid-Kunststoff (b) Nylon 6 besonders bevorzugt. Nylon 6 weist eine Wärmeformbeständigkeit (HDT), die höher ist als beim Polyolefin-Kunststoff (a). Durch den Zusatz von Nylon 6 wird die HDT und zusätzlich die Schlagzähigkeit des Gemisches erhöht. Besonders vorteilhaft ist die Verwendung von 4 Gew -% bis 15 Gew.-% des Polyamid Kunststoffes. Der Polyamid Kunststoff kann außerdem in Mengen von 12 5 bis 25 Gew.-% in der erfindungsgemäßen langfaserverstärkten Polyolefin-Kunststoff Struktur enthalten sein.

Erfindungsgemäß enthält das modifizierte Polyolefin (c) mindestens eine der folgenden Gruppen wie Carboxyl-, Carboxylanhydrid-, Metalcarboxylat-, Carboxylester-, Imino-, Amino- oder Epoxygruppe. Beispiele für den modifizierten Polyolefin-Kunststoff umfassen modifizierte Polyolefin Copolymere oder gepfropfte Copolymere, die hergestellt werden in dem chemisch folgende beispielhaft aufgeführte Verbindungen, wie Maleinsäureanhydrid, Fumarsäureanhydrid, Zitronensäureanhydrid, N-Phenylmaleimid, N-Cyclohexylmaleinimid, Glyicidylacrylat, Glycidylmethacrylat, Glycidylvinylbenzoat, N-[4-(2,3-epoxpropoxy)-3,5-dimethylbenzyl]acrylamid (AXE), Alkylmethacrylate und/oder Derivate davon in Polyolefine, wie Polypropylen, Polyethylen oder Ethylen/Propylen-Copolymere und im Polyamid gepfropfte Polyolefine eingeführt werden. Das modifizierte Polyolefin ist im Polymerisationsgrad nicht beschränkt, es kann auch ein Oligomer sein. Besonders bevorzugte modifizierte Polyolefine sind
Maleinsäureanhydrid-modifiziertes Polyethylen,
Maleinsäureanhydrid-modifiziertes Polypropylen,
Maleinsäureanhydrid-modifiziertes Polyethylen/Polypropylen-Copolymer,
Fumarsäureanhydrid-modifiziertes Polyethylen,
Fumarsäureanhydrid-modifiziertes Polypropylen,
Fumarsäureanhydrid-modifiziertes Polyethylen/Polypropylen-Copolymer,
Glycidylmethacrylat-modifiziertes Polyethylen,
Glycidylmethacrylat-modifiziertes Polypropylen,
AXE-modifiziertes Polyethylen,
AXE-modifiziertes Polypropylen und
Polyamid gepfropfte Polyolefine.

Das modifizierte Polyolefin kann außerdem in Mengen bis 2,4 Gew -%, in der erfindungsgemäßen langfaserverstärkten Polyolefin-Kunststoff Struktur enthalten sein.

Erfindungsgemäß ist die Verstärkungsfaser (d) nicht beschränkt auf ein bestimmtes Material. Beispiele für Verstärkungsfaser mit hohem Schmelzpunkt (Erweichungspunkt), wie Glasfaser, Kohlefaser, Metallfaser und aromatische Polyamidfaser können verwendet werden Erfindungsgemäß werden bevorzugt Glasfaser verwendet. Bei Glasfasern werden gewöhnlich Bündel mit einem Faserdurchmesser von 8 µm bis 25 µm und einem Gewicht von 500 g bis 4400 g pro 1000 m verwendet. Die Faser können in an sich bekannter Weise oberflächenbehandelt sein. Die Verstärkungsfaser kann außerdem in Mengen ab 50 % in der erfindungsgemäßen langfaserverstärkten Polyolefin-Kunststoff Struktur enthalten sein.

Die Faserbündel werden erhalten, in dem eine Anzahl von Fasern genommen und mit einer wäßrigen Lösung oder waßrigen Emulsion eines Schlichtesystems behandelt und dann gebündelt werden. Bevorzugt werden aufgewickelte Faserbündel verwendet, die gebündelt, getrocknet und auf Spulen aufgewickelt werden (Direkt-Roving). Es ergeben sich im wesentlichen endlos geformte Faserbündel.

Es können in der Polyolefin-Kunststoffstruktur zusätzlich bekannte Additive, wie Gleitmittel, Farbstoffe, Pigmente, Antioxidantien, Wärmestabilisatoren, Lichtstabilisatoren, Lichtschutzadditive, Verstärker und Hydrolysestabilisatoren enthalten sein.

Die efindungsgemäße langfaserverstärkte Polyolefin-Kunststoff Struktur enthält als Auditive bevorzugt mindestens ein Antioxidationsmittel und/oder UV-Stabilisator und/oder Farbmasterbatch.

Es hat sich gezeigt, daß Polyamide funktionelle Gruppen und/oder niedermolekulare Bestandteile enthalten, die Säure binden können. Die Wirkung der Geruchsminderung kann auch durch Zugabe von säurebindenden Zusätzen erreicht werden. Als solche eignen sich unter anderem niedermolekulare Verbindungen, Insbesondere stickstoffhaltige Verbindungen Besonders geeignet sind Verbindungen den Gruppen Amine, Amide, Säureamide, Polyamide und ähnliche Stoffklassen.

Als stickstoffhaltige Verbindungen geeignet sind außerdem heterocyclische Verbindungen mit mindestens einem Stickstoffatom als Heteroatom, welches entweder mit einem ammosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine und aus diesen Verbindungen hergestellte Mischungen. Vorteilhaft sind weiter Polyamide und Dicyandiamid, Harnstoff und seine Derivate sowie Pyrrolidon und davon abgeleitete Verbindungen. Beispiele für geeignete Pyrrolidone sind zum Beispiel Imidazolidinon und davon abgeleiteteVerbindungen, wie zum Beispiel Hydantoin und dessen Derivate sowie Allantoin und seine Derivate Geeignet sind weiter sind weiter Triamtno-1,3,5-Triazin (Melamin) und seine Derivate, wie zum Beispiel Melamin-Formaldehydkondensate und Methylolmelamin. Vorteilhaft sind Melamin, Methylolmelamin, Melamin-Formaldehydkondensate und Allantoin Die stickstoffhaltigen Verbindungen können einzeln oder in Kombination, auch in Kombination mit Polyamid, verwendet werden. Diese stickstoffhaltigen Verbindungen können in Mengen von 0 bis 50 Gew.-%, vorteilhaft in Mengen von 0.0001 bis bis 40 Gew.-%, insbesondere von 0.0001 bis 5 Gew.-% enthalten sein

Die langfaserverstärkte Polyolefin-Kunststoff Struktur enthält 0.1 Gew.-% bis 4.0 Gew.-%, bevorzugt 0.15 Gew.-% bis 3.0 Gew.-% und besonders bevorzugt 0.2 Gew.-% bis 2.0 Gew -% Antioxidationsmittel.

Die langfaserverstärkte Polyolefin-Kunststoff Struktur enthält 0.1 Gew.-% bis 4.0 Gew.-%, bevorzugt 0.15 Gew.-% bis 3 0 Gew.-% und besonders bevorzugt 0.2 Gew.-% bis 2.0 Gew.-% UV-Stabilisator.

Die langfaserverstärkte Polyolefin-Kunststoff Struktur enthält 0.1 Gew.-% bis 4.0 Gew.-%, bevorzugt 0 15 Gew.-% bis 3.0 Gew.-% und besonders bevorzugt 0.5 Gew.-% bis 1.5 Gew.-% Farbmasterbatch enthaltend sind.

Gemäß der Erfindung wird die langfaserverstärkte Polyolefin-Kunststoff Struktur bevorzugt nach dem Pultrusions-Verfahren hergestellt, wobei
I) Faserbündel durch eine flache Düse, die mit einer Schmelze aus Polyolefin (a), Polyamid (b), modifizierten Polyolefin (c) und Farbstoff und/oder Pigment (e) gefüllt ist, geführt werden,
II) die eingetauchten Faserbündel über eine Formdüse geführt werden,
III) die Faserbündel gekuhlt werden,
IV) die Faserbündel nachgeformt werden und
V) die Faserbündel quer zur Laufrichtung auf die Länge der Struktur geschnitten oder als endlose Struktur aufgewickelt werden.

Bei dem erfindungsgemäßen umweltfreundlichen und wirtschaftlichen Verfahren wird eine stäbchenförmige Struktur mit einer bestimmten Form erhalten. Die stäbchenförmige Struktur weist eine Länge von 3 mm bis 100 mm, bevorzugt von 4 mm bis 50 mm und besonders bevorzugt von 5 mm bis 15 mm auf. Die stäbchenförmige Struktur, auch als Granulat bezeichnet, weist einen Durchmesser von 1 mm bis 10 mm, von 2 mm bis 8 mm und besonders bevorzugt von 3 mm bis 6 mm auf.

Die langfaserverstärkten Polyolefin-Kunststoff Struktur wird auch erfindungsgemäß nach dem Compoundierverfahren oder nach dem Direktverfahren hergestellt.

Erfindungsgemäß wird ein geformter Gegenstand aus dem geschmolzenen, bevorzugt gefärbten langfaserverstärkten Polyolefin Granulat in an sich bekannter weise, wie Spritzguß, Extrusion, Blasformen oder Plastifizierpressen geformt.

Die Struktur des langfaserverstärkte Polyolefins ist erfindungsgemäß stabformig, streifenformig, bandformig oder flächenförmig. Bevorzugt ist die Stabform, die erhalten wird, in dem die Oberfläche der Faser, daher der zusammengesetzten gebündelten Faser, kontinuierlich parallel angeordnet mit einem thermoplastischen-Kunststoff zu einem Strang beschichtet werden und dann auf die benötigte Lange geschnitten werden.

Erfindungsgemäß können die Komponenten, ausgenommen die Verstärkungsfaser, in einem Kneter oder einem Extruder schmelzegemischt werden. Die Temperatur wird auf 5 °K bis 100 °K, bevorzugt auf 10 °K bis 60 °K oberhalb der Schmelztemperatur des höher schmelzenden Polymers eingestellt. Die Schmelzemischung ist nach einer Zeit von 30 Sekunden bis 15 Minuten, bevorzugt von 1 Minuten bis 10 Minuten abgeschlossen.

Erfindungsgemäß wird die langfaserverstärkte Polyolefin-Kunststoff Struktur zur Herstellung von Formteilen verwendet. Die Formteile, hergestellt aus der erfindungsgemäßen bevorzugt gefärbten langfaserverstärkten Polyolefin Struktur, weisen hervorragende mechanische Eigenschaften, insbesondere hervorragende Schlagzähigkeit, eine hohe Wärmeformbeständigkeit und geringe Verformbarkeit infolge von Wasserabsorbtion auf. Die so erzielte Einfärbung zeichnet sich durch gute Gleichmaßigkeit und keine Farbveranderung aus.

Erfindungsgemäß wird die bevorzugt gefarbte langfaserverstärkte Polyolefin-Kunststoff Struktur bevorzugt zur Herstellung von mechanisch und thermisch hoch beanspruchten bevorzugt gefärbten Formteilen, wie Formteile im Kraftfahrzeugbau, besonders aufgrund der geringen Geruchsemission im Innenbereich eines Kraftfahrzeugs verwendet.

Die Erfindung wird nachstehend anhand von Beispielen weiter erläutert.

### Beispiele

Die untersuchten gefärbten langfaserverstärkten Polyolefin-Kunststoff Strukturen wurden nach dem Pultrusionsverfahren hergestellt. Dazu wurde eine Reihe von Glasfaser Bündel (E-Glas, direkt roving 2400 tex) bei kontinuierlichem Abwickeln erhitzt und dann durch eine Schmelzdüse geleitet Die Schmelzdüse war befüllt mit einer Schmelze aus einem Polypropylen-Kunststoff (MFR 230/2,16 g pro 10 min = 48, gemessen nach ISO 1133), Polyamid 6 (VZ = 143 ml/g, gemessen in H₂SO₄), maleinsäureanhydrid gepfropftes Polypropylen (Polybond® 3200, Uniroyal Chemical) und Farbmasterbatch enthaltend Zinksulfid (ZnS) (grau, bestehend im wesentlichen aus 30 Gew.-% grau Pigmente, weiß und schwarz und 70 Gew.-% Trägersubstanz). Die Bestandteile der Schmelze wurden zuvor in einem Extruder im Gewichtsverhältnis, wie in Tabellen 1 und 3 angegeben, geschmolzen. Die Glasfaser Bündel Reihen wurden in den geschmolzenen Kunststoff in der Schmelzdüse getaucht. In diesem Schritt wurde der Anteil der Glasfaser Bündel auf 40 Gew.-% eingestellt, in dem die Abzuggeschwindigkeit der Glasfaserbündel und die Zugabemengen an geschmolzenen Polypropylen geregelt wurden. Die Polypropylen enthaltende Glasfaser Reihen (Stränge) wurden ausführend aus der Schmelzdüse durch eine Formdüse und eine Formrolle geführt und abgekühlt. Dann wurden die Stränge mit einem Stranggranulator auf eine stäbchenförmige Struktur von 10 mm Länge geschnitten.

Das dabei erhaltene Granulat wurde zu nachstehend beschriebenen Probekörpern spritzgegossen. Die Schlagzähigkeit und andere mechanischen Eigenschaften wurden wie nachstehend beschrieben gemessen
Bruchdehnung und Zug-E-Modul (Sekante zw. 0,05 % - 0,25% Dehnung) an Normprobe ISO B nach ISO 527,
Schlagzähigkeit Charpy AcU an Normprobe ISO A nach ISO 179,
Biegefestigkeit und Biege-E-Modul an Normprobe ISO A im Dreipunkt-Biegeversuch nach DIN 53 453.
Die gemessenen Ergebnisse gehen aus Tabelle 2 hervor.

### Vergleichsbeispiele

Als Vergleichsbeispiele wurden Zusammensetzungen ohne Polyamid (Vergleichsbeispiele 1 und 2) und ohne Pigment (Vergleichsbeispiel 3) genommen. Die Bestandteile der Zusammensetzungen gehen aus Tabellen 1 und 3, die gemessenen Werte gehen aus den Tabellen 2 und 4 hervor.

**Tabelle 1**

| Bestandteile | Beispiel 1 | Vergleichsbeispiel 1 |
|---|---|---|
| | Gew.-% | Gew.-% |
| Polypropylen | 34.10 | 53.60 |
| Polyamid | 14.70 | 0.00 |
| Modifiziertes Polypropylen | 7.30 | 2.1 |
| Glasfaser | 40.00 | 40.00 |
| Antioxidationsmittel | 1.50 | 1.60 |
| UV-Stabilisator | 1.50 | 1.60 |
| Farbmasterbatch | 1.00 | 1.10 |

**Tabelle 2**

| Mechanische Eigenschaften | Einheiten | Beispiel 1 | Vergleichsbeispiel 1 |
|---|---|---|---|
| Zug-E-Modul | [G Pa] | 8.60 | 7.90 |
| AcU | [kJ/m²] | 70.00 | 59.00 |
| Bruchdehnung | [%] | 2.60 | 2.20 |
| Biegefestigkeit | [M Pa] | 190.00 | 152.00 |
| Biegemodul | [G Pa] | 9.50 | 7.80 |

**Tabelle 3**

| Bestandteile | Beispiele | | Vergleichsbeispiele | |
|---|---|---|---|---|
| | 2 | 3 | 2 | 3 |
| | Gew.-% | Gew.-% | Gew.-% | Gew.-% |
| Polypropylen | 47.48 | 37.88 | 57 52 | 58.10 |
| Polyamid | 4.90 | 14.60 | 0.00 | 0.60 |
| Modifiziertes Polypropylen | 7.30 | 7.30 | 2.16 | 1.30 |
| Glasfaser | 40.00 | 40.00 | 40.00 | 40.00 |
| Pigment | 0.32 | 0.32 | 0.32 | 0.00 |

**Tabelle 4**

| Mechanische Eigenschaften | Einheiten | Beispiele | | Vergleichsbeispiele | |
|---|---|---|---|---|---|
| | | 2 | 3 | 2 | 3 |
| Zug-E-Modul | [G Pa] | 8.00 | 8.60 | 7.90 | 7.50 |
| AcU | [kJ/m²] | 68.00 | 70.00 | 59.00 | 69.00 |
| Bruchdehnung | [%] | 2.70 | 2.60 | 2.20 | 2.40 |
| Biegefestigkeit | [M Pa] | 161.00 | 190.00 | 152.00 | 161.00 |
| Biegemodul | [G Pa] | 8.60 | 9.50 | 7.80 | 7.90 |

Der Vergleich zwischen den Beispielen und Vergleichsbeispiel 1 und 2 zeigt, daß die Zusammensetzungen mit Pigmentanteil aber ohne Polyamid ungünstigere mechanische Eigenschaften aufweisen Der Vergleich von Vergleichsbeispiel 1 mit Vergleichsbeispiel 2 zeigt, daß durch Zugabe von Pigment in kleinen Mengen zu einem deutlichen Abfall der Schlagzähigkeit (AcU) fuhrt. Dieser Effekt kann deutlich gezeigt werden, selbst wenn Vergleichsbeispiel 2 einen sehr geringen Polyamidanteil aufweist Beispiel 3 zeigt, daß bei Einsatz von Polyamid und Pigment mechanische Eigenschaften erzielt werden können, die mit den Eigenschaften einer unpigmentierten Probe vergleichbar sind.

Die langfaserverstärkte Polyolefin-Kunststoff Strukturen gemäß Beispielen 1 bis 3 und den Vergleichsbeispiel unterscheiden sich vor allem dadurch, daß bei sulfidhaltigen Additiven gemäß Beispielen 1 bis 3 Polyamid vorhanden ist und gemäß Vergleichsbeispielen 1 und 2 kein Polyamid vorhanden ist. Werden die langfaserverstärkten Polyolefin-Kunststoff Strukturen verglichen, fällt auf, daß die gemäß den Beispielen hergestellten langfaserverstärkten Polyolefin-Kunststoff Strukturen wesentlich geringere Geruchsemissionen aufweisen, verglichen mit Vergleichsbeispielen 1 und 2 Der unangenehme Sulfidgeruch ist bei der erfindungsgemäßen langfaserverstärkten Polyolefin-Kunststoff Struktur fur die menschliche Nase nicht oder kaum mehr wahrnehmbar.

Die Erfindung zeigt überraschend und unerwartet, daß die erfindungsgemäßen langfaserverstärkten Polyolefin-Kunststoff Strukturen nicht nur erheblich verbesserte mechanische Eigenschaften aufweisen, sondern auch die sonst übliche Geruchsemission beseitigt ist.

## Patentansprüche

1. Langfaserverstärkte Polyolefin-Kunststoff Struktur mit einer Länge von ≥ 3 mm, enthaltend
a) 25 Gew.-% bis 58 Gew.-% mindestens eines Polyolefin-Kunststoffes,
b) 4 Gew.-% bis 25 Gew.-% mindestens eines Polyamid-Kunststoffes,
c) 1,5 Gew.-% bis 10 Gew.-% mindestens eines modifizierten Polyolefin-Kunststoffes,
d) 19 Gew.-% bis 58 Gew.-% mindestens einer Verstärkungsfaser,
e) 0,2 Gew.-% bis 5,0 Gew.-% mindestens eines schwefelhaltigen Additivs und
f) gegebenenfalls weitere Additive,
wobei die Verstärkungsfaser die gleiche Länge hat wie die Polyolefin-Kunststoff Struktur.

2. Langfaserverstärkte Polyolefin-Kunststoff Struktur nach Anspruch 1, wobei das modifizierte Polyolefin (c) mindestens eine der folgenden Gruppen wie Carboxyl-, Carboxylanhydrid-, Metalcarboxylat-, Carboxylester-, Imino-, Amino- oder Epoxygruppe mit 1 Gew.-% bis 50 Gew.-%, bezogen auf den Gesamtanteil aus (a) und (c) enthält.

3. Langfaserverstärkte Polyolefin-Kunststoff Struktur nach Anspruch 1 oder 2, wobei das Polyolefin (a) Polypropylen-Kunststoff ist.

4. Langfaserverstärkte Polyolefin-Kunststoff Struktur nach einem oder mehreren der Ansprüche 1 bis 3, wobei das Polyamid (b) Nylon 6 ist.

5. Langfaserverstärkte Polyolefin-Kunststoff Struktur nach einem oder mehreren der Ansprüche 1 bis 4, wobei die Verstärkungsfaser (d) Talkum, Stahlfaser, Wolastonit, Stahlfaser oder Glasfaser ist.

6. Langfaserverstärkte Polyolefin-Kunststoff Struktur nach einem oder mehreren der Ansprüche 1 bis 5, wobei als schwefelhaltiges Additiv ein schwefelhaltiges Farbmittel verwendet wird.

7. Langfaserverstärkte Polyolefin-Kunststoff Struktur nach Anspruch 6, wobei als schwefelhaltiges Farbmittel ein sulfidhaltiges Pigment verwendet wird.

8. Langfaserverstärkte Polyolefin-Kunststoff Struktur nach Anspruch 7, wobei als sulfidhaltiges Pigment Zinksulfid verwendet wird.

9. Langfaserverstärkte Polyolefin-Kunststoff Struktur nach einem oder mehreren der Ansprüche 1 bis 8, die als weiteres Additiv ein Farbmasterbatch enthält.

10. Langfaserverstärkte Polyolefin-Kunststoff Struktur nach Anspruch 9, die 0.1 Gew.-% bis 4.0 Gew.-%, bevorzugt 0.15 Gew.-% bis 3.0 Gew.-% und besonders bevorzugt 0.5 Gew.-% bis 1.5 Gew.-% Farbmasterbatch enthält.

11. Langfaserverstärkte Polyolefin-Kunststoff Struktur nach einem oder mehreren der Ansprüche 1 bis 8, die als weitere Additive mindestens ein Antioxidationsmittel und/oder einen UV-Stabilisator enthält.

12. Langfaserverstärkte Polyolefin-Kunststoff Struktur nach Anspruch 11, die 0.1 Gew.-% bis 4.0 Gew.-%, bevorzugt 0.15 Gew.-% bis 3.0 Gew.-% und besonders bevorzugt 0.2 Gew.-% bis 2.0 Gew.-% Antioxidationsmittel enthält.

13. Langfaserverstärkte Polyolefin-Kunststoff Struktur nach Anspruch 11, die 0.1 Gew.-% bis 4.0 Gew.-%, bevorzugt 0.15 Gew.-% bis 3.0 Gew.-% und besonders bevorzugt 0.2 Gew.-% bis 2.0 Gew.-% UV-Stabilisator enthält.

14. Langfaserverstärkte Polyolefin-Kunststoff Struktur nach einem oder mehreren der Ansprüche 1 bis 13, in denen das gesamte oder nur ein Teil des Polyamids ersetzt ist durch 0 bis 50 Gew.-% säurebindender Zusätze, insbesondere durch niedermolekulare stickstoffhaltige Verbindungen der Gruppe der Amine, Amide oder Säureamide.

15. Langfaserverstärkte Polyolefin-Kunststoff Struktur nach Anspruch 14, wobei als stickstoffhaltige Verbindung eine oder mehrere der Verbindungen ausgewählt aus den Gruppe der Amine, Amide oder Säureamide heterocyclische Verbindungen mit mindestens einem Stickstoffatom als Heteroatom, Pyridazin, Pyrimidin, Pyrazin, Pyrrolidon, Aminopyridin und davon abgeleitete Verbindungen, Melamin, 2,6-Diaminopyridin, substituierte und dimere Aminopyridine, Dicyandiamid, Harnstoff und seine Derivate, Pyrrolidon und davon abgeleitete Verbindungen, Imidazolidinon und davon abgeleiteteVerbindungen, Hydantoin und dessen Derivate, Allantoin und seine Derivate, Triamino-1,3,5-Triazin (Melamin) und seine Derivate, Melamin-Formaldehydkondensate, Methylolmelamin verwendet werden.

16. Ein geformter Gegenstand aus bevorzugt gefärbter langfaserverstärkter Polyolefin-Kunststoff Struktur nach einem oder mehreren der Ansprüche 1 bis 15, hergestellt durch Spritzguß, Extrusion, Blasformen oder Plastifizierpressen.

17. Verwendung einer langfaserverstärkten Polyolefin-Kunststoff Struktur nach einem oder mehreren der Ansprüche 1 bis 15 zur Herstellung von bevorzugt gefärbten Formteilen.

18. Verwendung einer langfaserverstärkten Polyolefin-Kunststoff Struktur nach einem oder mehreren der Ansprüche 1 bis 15 zur Herstellung von bevorzugt gefärbten Formteilen im Innenbereich und Außenbereich von Kraftfahrzeugen.

## Claims

1. Long-fibre-reinforced polyolefin structure with a length of ≥ 3 mm, comprising
a) from 25 to 58% by weight of at least one polyolefin,
b) from 4 to 25% by weight of at least one polyamide,
c) from 1.5 to 10% by weight of at least one modified polyolefin,
d) from 19 to 58% by weight of at least one reinforcing fibre,
e) from 0.2 to 5.0% by weight of at least one sulphur-containing additive.
and
f) if appropriate, further additives,
where the reinforcing fibre has the same length as the polyolefin structure.

2. Long-fibre-reinforced polyolefin structure according to Claim 1, where the modified polyolefin (c) contains from 1 to 50% by weight of at least one of the following groups: carboxy, carboxylic anhydride, metal carboxylate, carboxylic ester, imino, amino, or epoxy group, based on the total content of (a) and (c).

3. Long-fibre-reinforced polyolefin structure according to Claim 1 or 2, where the polyolefin (a) is polypropylene.

4. Long-fibre-reinforced polyolefin structure according to one or more of Claims 1 to 3, where the polyamide (b) is nylon-6.

5. Long-fibre-reinforced polyolefin structure according to one or more of Claims 1 to 4, where the reinforcing fibre (d) is talc, steel fibre, wollastonite, or glass fibre.

6. Long-fibre-reinforced polyolefin structure according to one or more of Claims 1 to 5, where, a sulphur-containing colorant is used as sulphur-containing additive.

7. Long-fibre-reinforced polyolefin structure according to Claim 6, where a sulphide-containing pigment is used as sulphur-containing colorant.

8. Long-fibre-reinforced polyolefin structure according to Claim 7, where zinc sulphide is used as sulphide-containing pigment.

9. Long-fibre-reinforced polyolefin structure according to one or more of Claims 1 to 8, which comprises a colour masterbatch as further additive.

10. Long-fibre-reinforced polyolefin structure according to Claim 9, which comprises from 0.1 to 4.0% by weight, preferably from 0.15 to 3.0% by weight and particularly preferably from 0.5 to 1.5% by weight, of colour masterbatch.

11. Long-fibre-reinforced polyolefin structure according to one or more of Claims 1 to 8, which, as further additives, comprises at least one antioxidant and/or one UV stabilizer.

12. Long-fibre-reinforced polyolefin structure according to Claim 11, which comprises from 0.1 to 4.0% by weight, preferably from 0.15 to 3.0% by weight and particularly preferably from 0.2 to 2.0% by weight of antioxidant.

13. Long-fibre-reinforced polyolefin structure according to Claim 11, which comprises from 0.1 to 4.0% by weight, preferably from 0.15 to 3.0% by weight and particularly preferably from 0.2 to 2.0% by weight of UV stabilizer.

14. Long-fibre-reinforced polyolefin structure according to one or more of Claims 1 to 13, in which all of the polyamide, or only a portion thereof, has been replaced by from 0 to 50% by weight of acid-binding additives, in particular by low-molecular-weight nitrogen-containing compounds of the group of the amines, amides, or acid amides.

15. Long-fibre-reinforced polyolefin structure according to Claim 14, where, as nitrogen-containing compound, use is made of one or more compounds selected from the groups consisting of amines, amides or acidic amides, heterocyclic compounds having at least one nitrogen atom as heteroatom, pyridazine, pyrimidine, pyrazine, aminopyridine, and compounds derived therefrom, melamine, 2,6-diaminopyridine, substituted and dimeric aminopyridines, dicyandiamide, urea and its derivatives, pyrrolidone and compounds derived therefrom, imidazolidinone and compounds derived therefrom, hydantoin and its derivatives, allantoin and its derivatives, triamino-1,3,5-triazine (melamine) and its derivatives, melamine-formaldehyde condensates, methylolmelamine.

16. Moulded article made from a preferably coloured long-fibre-reinforced polyolefin structure according to one or more of Claims 1 to 15, produced by injection moulding, extrusion, blow moulding, or compression with plastification.

17. Use of a long-fibre-reinforced polyolefin structure according to one or more of Claims 1 to 15 for producing preferably coloured mouldings.

18. Use of a long-fibre-reinforced polyolefin structure according to one or more of Claims 1 to 15 for producing preferably coloured mouldings for the interior or exterior of motor vehicles.

## Revendications

1. Structure synthétique en polyoléfine, renforcée par une ou des fibres longues, présentant une longueur ≥3 mm, contenant
a) 25% en poids à 58% en poids d'au moins un matériau synthétique en polyoléfine,
b) 4% en poids à 25% en poids d'au moins un matériau synthétique en polyamide,
c) 1,5% en poids à 10% en poids d'au moins un matériau synthétique en polyoléfine modifiée,
d) 19% en poids à 58% en poids d'au moins une fibre de renforcement,
e) 0,2% en poids à 5,0% en poids d'au moins un additif contenant du soufre et
f) le cas échéant d'autres additifs,
la fibre de renforcement ayant la même longueur que la structure synthétique en polyoléfine.

2. Structure synthétique en polyoléfine renforcée par une ou des fibres longues selon la revendication 1, la polyoléfine modifiée (c) contenant au moins un des groupes suivants tels que le groupe carboxyle, carboxylanhydride, métalcarboxylate, carboxylester, imino, amino ou époxy, à raison de 1% en poids à 50% en poids, par rapport à la proportion totale de (a) et (c).

3. Structure synthétique en polyoléfine renforcée par une ou des fibres longues selon la revendication 1 ou 2, la polyoléfine (a) étant un matériau synthétique de polypropylène.

4. Structure synthétique en polyoléfine renforcée par une ou des fibres longues selon l'une ou plusieurs des revendications 1 à 3, le polyamide (b) étant le Nylon 6.

5. Structure synthétique en polyoléfine renforcée par une ou des fibres longues selon l'une ou plusieurs des revendications 1 à 4, la fibre de renforcement (d) étant du talc, une fibre d'acier, de la wollastonite, une fibre d'acier ou une fibre de verre.

6. Structure synthétique en polyoléfine renforcée par une ou des fibres longues selon l'une ou plusieurs des revendications 1 à 5, en utilisant comme additif contenant du soufre un colorant contenant du soufre.

7. Structure synthétique en polyoléfine renforcée par une ou des fibres longues selon la revendication 6, en utilisant comme colorant contenant du soufre un pigment contenant du sulfure.

8. Structure synthétique en polyoléfine renforcée par une ou des fibres longues selon la revendication 7, en utilisant, comme pigment contenant du sulfure, du sulfure de zinc.

9. Structure synthétique en polyoléfine renforcée par une ou des fibres longues selon l'une ou plusieurs des revendications 1 à 8, qui contient comme autre additif un lot-maître de teinture.

10. Structure synthétique en polyoléfine renforcée par une ou des fibres longues selon la revendication 9, qui contient 0,1% en poids à 4,0% en poids, de préférence 0,15% en poids à 3,0% en poids et de manière particulièrement préférée 0,5% en poids à 1,5% en poids de lot-maître de teinture.

11. Structure synthétique en polyoléfine renforcée par une ou des fibres longues selon l'une ou plusieurs des revendications 1 à 8, qui contient comme autres additifs au moins un anti-oxydant et/ou un stabilisant des UV.

12. Structure synthétique en polyoléfine renforcée par une ou des fibres longues selon la revendication 11, qui contient 0,1% en poids à 4,0% en poids, de préférence 0,15% en poids à 3,0% en poids et de manière particulièrement préférée 0,2% en poids à 2,0% en poids d'anti-oxydant.

13. Structure synthétique en polyoléfine renforcée par une ou des fibres longues selon la revendication 11, qui contient 0,1% en poids à 4,0% en poids, de préférence 0,15% en poids à 3,0% en poids et de manière particulièrement préférée 0,2% en poids à 2,0% en poids de stabilisant des UV.

14. Structure synthétique en polyoléfine renforcée par une ou des fibres longues selon l'une ou plusieurs des revendications 1 à 13, dans laquelle tout le polyamide ou seulement une partie de celui-ci est remplacé par 0 à 50% en poids d'additifs liant les acides, en particulier par des composés de bas poids moléculaire, contenant de l'azote, du groupe constitué par les amines, les amides ou les amides d'acide.

15. Structure synthétique en polyoléfine renforcée par une ou des fibres longues selon la revendication 14, en utilisant comme composé contenant de l'azote, un ou plusieurs composés choisis dans le groupe constitué par les amines, les amides ou les amides d'acide de composés hétérocycliques comprenant au moins un atome d'azote comme hétéroatome, la pyridazine, la pyrimidine, la pyrazine, la pyrrolidone, l'aminopyridine et les composés dérivés de ceux-ci, la mélamine, la 2,6-diaminopyridine, les aminopyridines substituées et dimères, le dicyanodiamide, l'urée et ses dérivés, la pyrrolidone et les composés dérivés de celle-ci, l'imidazolidinone et les composés dérivés de celle-ci, l'hydantoine et ses dérivés, l'allantoine et ses dérivés, la triamino-1,3,5-triazine (mélamine) et ses dérivés, les produits de condensation de la mélamine et du formaldéhyde, la méthylolmélamine.

16. Objet façonné à partir d'une structure synthétique en polyoléfine renforcée par une ou des longues fibres, de préférence teintée, selon l'une ou plusieurs des revendications 1 à 15, réalisé par moulage par injection, extrusion, moulage par soufflage ou compression par plastification.

17. Utilisation d'une structure synthétique en polyoléfine renforcée par une ou des longues fibres selon l'une ou plusieurs des revendications 1 à 15 pour la réalisation de pièces façonnées de préférence teintées.

18. Utilisation d'une structure synthétique en polyoléfine renforcée par une ou des longues fibres selon l'une ou plusieurs des revendications 1 à 15 pour la réalisation de pièces façonnées de préférence teintées dans la partie intérieure et extérieure de véhicules.
